# EUROPÄISCHE PATENTANMELDUNG

(11) **EP 4 530 921 A1**
(43) Veröffentlichungstag der Anmeldung: **02.04.2025**
(21) Anmeldenummer: 23200914.2
(22) Anmeldetag: 29.09.2023
(51) Int. Cl.: G06F 40/237, G06F 16/36, G06F 40/35, G06N 5/022, G06N 20/00

(54) **VERFAHREN UND SYSTEM ZUR NUTZUNG EINER KÜNSTLICHEN INTELLIGENZ MIT EINEM SPRACHMODELL ZUR SEMANTISCHEN ANALYSE TEXTBASIERTER INFORMATIONEN EINER INDUSTRIELLEN AUTOMATISIERUNGSANORDNUNG**

(71) Anmelder: Siemens Aktiengesellschaft, 80333 München (DE)
(72) Erfinder: Witte, Martin, 91126 Schwabach (DE)
(74) Vertreter: Siemens Patent Attorneys

(57) **Zusammenfassung**

Die Erfindung betrifft ein Verfahren und ein System zur Nutzung einer künstlichen Intelligenz (KI) mit einem Sprachmodell zur semantischen Analyse textbasierter Informationen (IN) einer industriellen Automatisierungsanordnung, insbesondere von textbasierten Ausgaben, Anweisungen oder anderen Informationsartefakten aus einem industriellen Programm oder Automatisierungsobjekt, wobei die künstliche Intelligenz (KI) mit einer Anfrage mit den Informationen (TE) konfrontiert wird und wobei das Sprachmodell eine semantische Analyse (SA) der Informationen (TE) ausgibt. Dabei wird die künstliche Intelligenz (KI) vor der Anfrage mit einer Ontologie der Konzepte einer Domäne der industriellen Automatisierungsanordnung angereichert. Damit ist es möglich, Informationen über die Verwendung von Begriffen oder anderen Textelementen und deren Zusammenhänge festzustellen und für eine Bedienung oder Weiterentwicklung der Automatisierungsanordnung zu verwenden.

## Beschreibung

Die Erfindung betrifft ein Verfahren zur Nutzung einer künstlichen Intelligenz mit einem Sprachmodell zur semantischen Analyse textbasierter Informationen einer industriellen Automatisierungsanordnung gemäß dem Oberbegriff des Patentanspruchs 1, und ein System zur Nutzung einer künstlichen Intelligenz mit einem Sprachmodell zur semantischen Analyse textbasierter Informationen einer industriellen Automatisierungsanordnung gemäß dem Oberbegriff des Patentanspruchs 10.

Zur Analyse von Programm- oder Textelementen industrieller Automatisierungsanordnungen, beispielsweise Programmblöcke, Alarmmeldungen, Bildschirmausgaben und dergleichen, werden vermehrt Systeme mit künstlicher Intelligenz eingesetzt. Insbesondere ist es erwünscht, gebräuchliche Sprachmodelle wie ChatGPT des Anbieters OpenAI zur Unterstützung von Bedienpersonal, Projektingenieuren und anderem Fachpersonal einzusetzen.

Während es möglich ist, Sprachkonstrukte (sog. Artefakte) eines industriellen Automatisierungsprogramms oder -projekts wie Tags (z.B. Bezeichner von Variablen oder Datenpunkten), Datenblöcke, Funktionsblöcke, Alarme oder Bildschirme in eine Ontologie zu automatisieren oder zu überführen, ist die Semantik der Anwendungsdomäne, also der realen zu steuernden Automatisierungsanordnung und ihre physischen Elemente, nicht zugänglich. Die genannten Sprachkonstrukte oder Artefakte sind Konstrukte der verwendeten Automatisierungsprogrammiersprache; es sollen hier aber mit Sprachkonstrukt auch andere Artefakt-Typen in einer Automatisierungslösung, wie z.B. Screens (Bildschirminhalte), Alarme bzw. Alarm-Meldungen, Geräte und Gerätebeschreibungen (Devices) etc. gemeint sein.

Der Zweck eines Funktionsbausteins, die Semantik eines Tags, der Inhalt eines Visualisierungselements oder dgl. ist nur durch den jeweiligen Namen, Kommentare oder andere Textelemente verständlich. Daher kann semantische Technologie zur Suche nach Artefakten, zur Beschreibung von Beziehungen, zum Verständnis der Beziehung von Funktionen und Operationen zu Anlagenelementen oder zur Sicherstellung der Konsistenz zwischen den Automatisierungsartefakten und ihrer Außenwelt nicht angewendet werden. Dies wäre insbesondere notwendig, um sicherzustellen, dass KI-Algorithmen ein korrektes Ergebnis haben, wie zum Beispiel zur Generierung von Automatisierungscode.

Es existieren bereits grundlegende Automatisierungsontologien, die grundlegende Automatisierungskonzepte wie FBs, DBs, Tags, Screens oder Alarme mit Beziehungen dazwischen erfassen, aber es fehlt dabei der Bezug zu realen Objekten.

Es ist also eine Aufgabe der vorliegenden Erfindung, ein System und ein Verfahren vorzuschlagen, mit dem Textelemente aus dem industriellen Automatisierungsumfeld semantisch analysiert werden, wobei insbesondere die Verwendung von Begriffen oder Textelementen und deren Zusammenhänge erkannt wird.

Die der Lösung dieser Aufgabe zugrunde liegende Idee ist, eine Ontologie zu erstellen, die die Hauptkonzepte des Bereichs (Domäne) erfasst, auf den sich die automatisierten Projekte beziehen. Die Anwendungssemantik ist dabei unter anderem in einer standardisierten Namenskonvention kodiert, wobei sich die Namen typischerweise auf die visualisierte Anlagenstruktur beziehen, mit der IO-Tags (also Ein- und Ausgangsschnittstellen und deren Bezeichner) verbunden sind oder die durch eine Reihe von Funktionsblöcken, die auch jeweils einen strukturierten Namen aufweisen, gesteuert werden.

Die Aufgabe wird insbesondere durch eine Verfahren nach Patentanspruch 1 und durch ein System nach Patentanspruch 10 gelöst.

Dabei wird ein Verfahren zur Nutzung einer künstlichen Intelligenz, insbesondere eines Sprachmodells, zur semantischen Analyse textbasierter Informationen einer industriellen Automatisierungsanordnung, insbesondere von textbasierten Ausgaben, Anweisungen oder anderen Informationsartefakten aus einem industriellen Programm oder Automatisierungsobjekt (z.B Bildschirmausgabe eines Bediengerätes), vorgeschlagen, wobei das Sprachmodell mit einer Anfrage mit den Informationen konfrontiert wird und wobei das Sprachmodell eine semantische Analyse der Informationen ausgibt. Dabei wird die künstliche Intelligenz mit einer Ontologie der Konzepte einer Domäne der industriellen Automatisierungsanordnung angereichert, wobei in einem ersten Schritt aus einem für die Automatisierungsanordnung oder aus einem für die Domäne gebräuchlichen Automatisierungsstandard Namenskonventionen für Textelemente, insbesondere für strukturierte Bezeichner, extrahiert und in ontologische Konzepte umgesetzt werden, in einem zweiten Schritt aus zumindest einem Automatisierungsprojekt der Domäne oder einer artverwandten Domäne viele oder alle Textelemente, insbesondere aus Programmcode, Kommentaren, Alarmen, Meldungen oder Bildschirmausgaben, extrahiert werden, in einem dritten Schritt alle irrelevanten Textbestandteile, insbesondere Artikel und Präpositionen, aus den Textelementen entfernt werden, in einem vierten Schritt aus den Textelementen ein probabilistisches Sprachmodell generiert und alle mit einer über einem Schwellwert liegenden Wahrscheinlichkeit auftretenden Textelemente, insbesondere Substantive, zu der Ontologie hinzugefügt werden, und in einem fünften Schritt für die oder in der Ontologie Relationen zwischen Textelementen ermittelt und gespeichert werden, wonach das Sprachmodell auf Basis der Ontologie eine semantische Analyse der eingegebenen Informationen durchführt und semantische Bezüge zu den eingegebenen Informationen ausgibt. Damit ist es möglich, Informationen über die Verwendung von Begriffen oder anderen Textelementen und deren Zusammenhänge festzustellen und für eine Bedienung oder Weiterentwicklung der Automatisierungsanordnung zu verwenden.

Die Aufgabe wird mit denselben Vorteilen durch ein System zur Nutzung einer künstlichen Intelligenz, insbesondere eines Sprachmodells, zur semantischen Analyse textbasierter Informationen einer industriellen Automatisierungsanordnung, insbesondere von textbasierten Ausgaben, Anweisungen oder anderen Informationsartefakten aus einem industriellen Programm oder Automatisierungsprojekt, gelöst, wobei vorgesehen ist, das Sprachmodell mit einer Anfrage mit den Informationen zu konfrontieren und wobei das Sprachmodell zur Ausgabe einer semantische Analyse der Informationen eingerichtet ist. Dabei ist das System zur Durchführung des ersten bis fünften Verfahrensschritt aus dem Verfahren gemäß Patentanspruch 1 eingerichtet.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für das erfindungsgemäße System. Die vorteilhaften Ausgestaltungen können sowohl einzeln, als auch in Kombination miteinander realisiert werden.

Eine gute Lösung ergibt sich, wenn im fünften Schritt die Relationen anhand von Bedingungen zwischen den Textelementen und/oder anhand von der Wahrscheinlichkeit des gemeinsamen Auftretens der Textelemente ermittelt werden. Zudem kann bei der Ermittlung der Wahrscheinlichkeit des gemeinsamen Auftretens ein räumlicher Abstand zwischen den Textelementen in einem Textblock berücksichtigt werden. Ebenso einfach und zuverlässig funktioniert der Ansatz, in dem vierten Schritt zur Generierung des probabilistischen Sprachmodells eine relative oder absolute Häufigkeit des Auftretens des Textelementes im analysierten Automatisierungsprojekt festzustellen und daraus die Wahrscheinlichkeit des Auftretens eines Textelementes oder einer zusammenhängenden Gruppe von Textelementen zu errechnen.

Mehrfacherfassungen, die insbesondere die statistischen Methoden des Verfahrens beeinträchtigen, werden vermieden, indem in dem dritten Schritt ein Wort auf seine Grundform reduziert und/oder die Rolle eines Wortes (beispielsweise Subjekt, Prädikat, Objekt oder Verb) festgestellt und gespeichert wird.

Vorteilhaft werden durch die künstliche Intelligenz mittels der Ontologie die Informationen in einen Graphen umgesetzt, wobei zu den Elementen des Graphen jeweils eine aus der Ontologie hergeleitete Funktion und/oder eine Relation zu anderen Elementen ausgegeben wird. Graphen sind im industriellen Umfeld eine gebräuchliche Form der Notation, die auch maschinell gut weiterverarbeitet werden kann, insbesondere für Analysen, Entscheidungsbäume oder für Software-Generatoren.

In vielen vorteilhaften Varianten werden aus der Ausgabe der künstlichen Intelligenz Handlungsanweisungen für eine Konfigurierung, Beeinflussung oder Wartung der Automatisierungsanordnung erzeugt. Dazu ist es auch vorteilhaft möglich, aus der Ausgabe der künstlichen Intelligenz Programmartefakte, Steuerungsinformationen und/oder Konfigurierungsdaten für die Automatisierungsanordnung, insbesondere für die Generierung von Programmcode für eine industrielle Automatisierungskomponente der Automatisierungsanordnung, zu erzeugen.

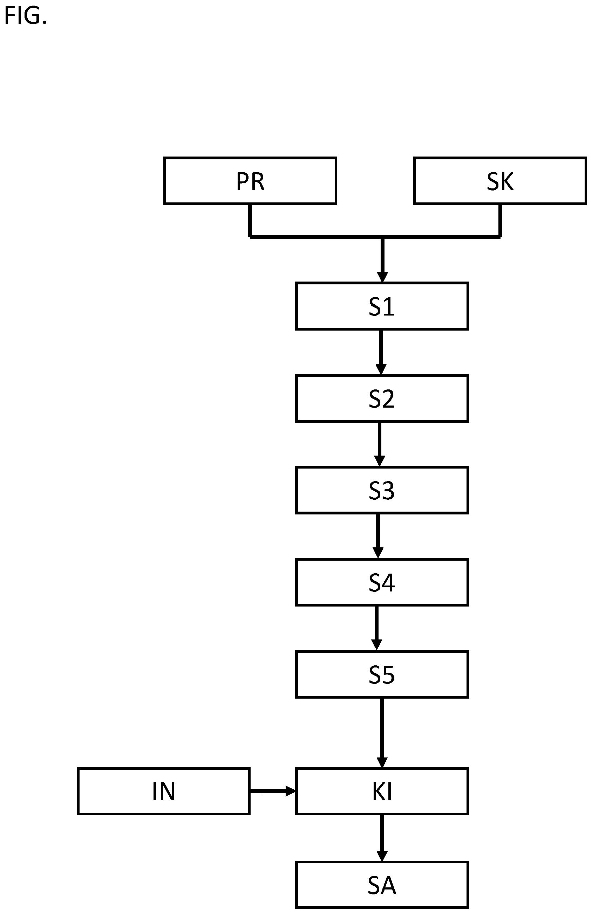

Ein Ausführungsbeispiel des erfindungsgemäßen Verfahrens wird nachfolgend anhand der Zeichnung erläutert. Es dient gleichzeitig der Erläuterung eines erfindungsgemäßen Systems.

Die Figur zeigt, dass eine Anzahl Automatisierungsprojekte PR und semantische Konventionen SK, auch semantische Konzepte genannt, aus einer für den jeweiligen Anwendungsfall einschlägigen Domäne (z.B. Fertigung von Karosseriebauteilen, Synthese von Kohlenwasserstoffverbindungen oder dgl.) der Automatisierungstechnik in fünf Schritten S1, ..., S5 zu einer Ontologie ausgewertet werden, die in eine künstliche Intelligenz KI eingebracht wird. Weiter können optional auch bestehende (ältere) Projekte PR aus derselben industrielle Domäne verarbeitet werden. Die künstliche Intelligenz KI wird dann im operativen Betrieb mit Anfragen konfrontiert, die Informationen IN beispielsweise in Form von Textbestandteilen umfassen. Die künstliche Intelligenz KI gibt dann eine semantische Analyse der Informationen IN, in diesem Fall also der in der Anfrage enthaltenen Textbausteine oder dgl., aus.

Dazu wird im Folgenden gezeigt, dass eine Ontologie erstellt wird, die die Hauptkonzepte des Bereichs (Domäne) erfasst, auf den sich die automatisierten Projekte PR beziehen. Die Anwendungssemantik ist dabei unter anderem in einer standardisierten Namenskonvention kodiert, wobei sich die Namen typischerweise auf die visualisierte Anlagenstruktur beziehen, mit der I/O-Tags (also Bezeichner der Ein- und Ausgangsschnittstellen) verbunden sind oder die durch eine Reihe von Funktionsblöcken, die auch jeweils einen strukturierten Namen aufweisen, gesteuert werden.

Im ersten Schritt S1 werden die Namenskonventionen SK des entsprechenden Automatisierungsstandards analysiert. Diese können kundenspezifisch ausgestaltet sein; beispielsweise hat ein Hersteller von Automobilen für seine gebräuchlichen Automatisierungskomponenten, z.B. Pressen, Roboter, Greifer, Türen etc., jeweils eigene Bezeichner und Abkürzungen. Die Benennungsregeln werden in ontologische Konzepte umgewandelt.

### Ein Beispiel:

Ein Textelement eines Source-Codes lautet:
- ++ST030+IR001_FB

In der Namenskonvention bedeutet ST dann Station, IR bedeutet Industrieller Roboter ("Industrial Robot") und FB kann Funktionsbaustein oder Funktionsblock bedeuten. Aus dem Textelement wird dann eine Ontologie ermittelt und in das Sprachmodell der künstlichen Intelligenz aufgenommen, das wie folgt aussehen kann:
- Konzept "Station" bezeichnet mit ++STxxx ;
- Konzept "Industrieroboter", gekennzeichnet mit +IRxxx ;
- Der Industrieroboter kann Teil einer Station sein .

In einem zweiten Schritt S2 werden alle Texte (Kommentare, Alarmtext, Bildschirmtext...) aus einer Reihe von Projekten mit ähnlicher Domäne, z. B. alle "White Body"-Projekte (Karosseriebau) eines Herstellers ("OEM") nach dem oben genannten Standard extrahiert. Bei unterschiedlichen Quellen können diese auch bedarfsweise in eine gemeinsame Sprache übersetzt werden.

In einem dritten Schritt S3, der auch mit dem zweiten Schritt S2 kombiniert werden kann, werden alle Wörter entfernt, die irrelevant sind (Artikel, Präpositionen usw.), dazu werden die Wörter auf ihre Wurzel (Infinitiv für Verben, Nominativ für Substantive usw.) reduziert bzw. zurückgeführt. Es wird dazu in einer vorteilhaften Variante die Art des Wortes (Substantiv, Verb, Adjektiv, Adverb) und wenn möglich die Rolle des Wortes im Satz (Subjekt, Prädikat, Objekt) ermittelt und zu den Worten als eine Meta-Information gespeichert.

In einem vierten Schritt S4 wird aus den vorstehend ermittelten Zwischenergebnissen ein probabilistisches Sprachmodell erstellt, welches insbesondere statistische Eigenschaften des Auftretens von Worten oder Begriffen analysiert. Dies kann die Wahrscheinlichkeit abdecken, dass ein Wort in einem Begriff oder Satz vorkommt, die Wahrscheinlichkeit, dass zwei Wörter im selben Satz vorkommen, oder die bedingte Wahrscheinlichkeit, dass ein Wort in einem Satz oder einer Phrase vorkommt, wenn ein bestimmtes anderes Wort in dem Satz oder der Phrase vorkommt. Es kann auch zwischen verschiedenen Rollen des Wortes in seinem Vorkommen unterscheiden. Der Ontologie werden dann diejenigen Wörter hinzugefügt, deren Auftretenswahrscheinlichkeit oder Häufigkeit oberhalb einer minimalen Wahrscheinlichkeitsgrenze liegen. Je nach Wortart oder Rolle können unterschiedliche Schwellwerte angesetzt werden.

In einem fünften Schritt S5 werden die Beziehungen zwischen Wörtern basierend auf der bedingten oder gemeinsamen Wahrscheinlichkeit und der Rolle der Wörter ermittelt. Dies bedeutet beispielsweise, dass ein räumlicher Zusammenhang wischen Worten oder Bedingungen (beispielsweise aus wenn-dann-Konstrukten oder aus mathematischen Operationen) eine Beziehung erkennen lassen.

Jetzt können beispielsweise SPS- und HMI-Artefakte (also Informationen basierend auf Textelementen TE aus Programmen speicherprogrammierbarer Steuerungen oder aus Ausgabetexten von Bedien- und Beobachtungsgeräten - HMI) in einem bestimmten Projekt auf standardisierte Weise semantisch analysiert, durchsucht und annotiert werden, basierend auf der abgeleiteten Ontologie. So können z.B. die Automatisierungsartefakte (FB, FC, Tags, Netzwerke, Bildschirme, Alarme etc.) in eine Graphdatenbank integriert werden, einschließlich ihres Verwendungszwecks (z.B. für Netzwerke) oder ihrer Beziehung zum Anlagenmodell (für Funktionen, Bildschirme oder Alarme) oder ihre Fehlertypen (für Alarme). Die verwendete Technologie sind hier semantische Technologien wie bei SPARQL, SHACL oder OWL.

Ein erstes Anwendungsbeispiel analysiert den internen Bezeichner einer Anzeigeseite für ein Bedien- und Beobachtungsgerät (HMI - Human Machine Interface):
- Screen with name ++ST010+IR002_IDB_FG001_{SYMB}ROBOT_APPL_GRIPPER{Registe r}

Dieses Textelement wird unter Zuhilfenahme einer vorher erlernten Namenskonvention und unter Zuhilfenahme der Erkenntnis, dass Begriffe wie "ROBOT", "APPL" und "GRIPPER") (Greifer) in einem unmittelbaren räumlichen Zusammenhang im Textelement TE stehen, analysiert zu:
- Bild der "Station" 10 für einen "Industrieroboter" in der Funktionsgruppe "001" und dessen "Greifer"-"Anwendung" .

Ein zweites Anwendungsbeispiel analysiert den Kommentar zu einer Programmstruktur ("Netzwerkkommentar") in einem Automatisierungsprogramm
- "Invocation protective grid door Amgard"
(in deutscher Sprache: "Aufruf Schutzgittertür Amgard").

Dieser Kommentar wird unter Zuhilfenahme einer vorher erlernten Namenskonvention und unter Verwendung der vorher trainierten Ontologie analysiert zu einer für Menschen verständlichen Kommentierung der einzelnen Programmstruktur (in industriellen Programmiersprachen als "Netzwerk" bezeichnet):
- Netzwerkzweck ist es, die "Schutzgittertür" vom Typ "Amgard" aufzurufen.

Ein drittes Anwendungsbeispiel analysiert einen Alarmtext, der zur Ausgabe eines Bedienpanels ("HMI-panel") im industriellen Umfeld kommt:
- Alarmtext "close clamp"

Die deutsche Übersetzung dazu lautet "Klammer schließen".
- Der Benutzer muss eine "Klammer" "schließen".

Zunächst ist dies zwar nur eine Übersetzung, aber da der Alarm Teil der Automatisierungsontologie ist, kann seine Beziehung zum betroffenen Funktionsbaustein (FB) und zum Netzwerk (Programmstruktur), das den Alarm auslöst, aus einer Ontologieverwaltung (z.B. das Produkt GraphDB) abgerufen werden, einschließlich des Aktors oder Sensors, der in der Anlage ausgefallen ist.

Grundlegende Ontologien sind in Automatisierungsdomänen bekannt, diese können beispielsweise mit dem Produkt "Simatic Project Insight" verwaltet und angezeigt werden, beziehen sich aber nicht auf Beziehungen zu realen Objekten, sondern analysieren Beziehungen innerhalb eines Projektes oder Struktur. Die hier vorgeschlagene Lösung sucht basierend auf der grundlegenden Automatisierungsontologie nach Automatisierungsartefakten und regulären Ausdrücken, die anhand von Texten und Kommentaren verarbeitet werden. Damit sind reale Bezüge feststellbar. Fragen wie "Welche Blöcke im Programm machen dies oder jenes" können mit Bezug zu physischen Einheiten beantwortet werden. So können beispielsweise Alarmmeldungen analysiert werden, ohne den zugrunde liegenden Programmcode manuell auszuwerten. Das Verfahren führt also zu einer neuen Art von "Expertensystemen".

## Patentansprüche

1. Verfahren zur Nutzung einer künstlichen Intelligenz (KI) mit einem Sprachmodell zur semantischen Analyse textbasierter Informationen (IN) einer industriellen Automatisierungsanordnung, insbesondere von textbasierten Ausgaben, Anweisungen oder anderen Informationsartefakten aus einem industriellen Programm oder Automatisierungsobjekt,
wobei die künstliche Intelligenz (KI) mit einer Anfrage mit den Informationen (TE) konfrontiert wird und wobei das Sprachmodell eine semantische Analyse (SA) der Informationen (TE) ausgibt,
**dadurch gekennzeichnet, dass**
die künstliche Intelligenz (KI) vor der Anfrage mit einer Ontologie der Konzepte einer Domäne der industriellen Automatisierungsanordnung angereichert wird, wobei in einem ersten Schritt (S1) aus einem für die Automatisierungsanordnung oder aus einem für die Domäne gebräuchlichen Automatisierungsstandard Namenskonventionen (SK) für Textelemente, insbesondere für strukturierte Bezeichner, extrahiert und in ontologische Konzepte umgesetzt werden,
in einem zweiten Schritt (S2) aus zumindest einem Automatisierungsprojekt (PR) der Domäne oder einer artverwandten Domäne viele oder alle Textelemente, insbesondere aus Programmcode, Kommentare, Alarme, Meldungen oder Bildschirmausgaben, extrahiert werden,
dass in einem dritten Schritt (S3) alle irrelevanten Textbestandteile, insbesondere Artikel und Präpositionen, aus den Textelementen entfernt werden,
dass in einem vierten Schritt (S4) aus den Textelementen ein probabilistisches Sprachmodell generiert und alle mit einer über einem Schwellwert liegenden Wahrscheinlichkeit auftretenden Textelemente, insbesondere Substantive, zu der Ontologie hinzugefügt werden, und dass in einem fünften Schritt (S5) für die oder in der Ontologie Relationen zwischen Textelementen ermittelt und gespeichert werden,
wonach das Sprachmodell auf Basis der Ontologie eine semantische Analyse (SA) der eingegebenen Informationen (IN) durchführt und semantische Bezüge zu den eingegebenen Informationen (TE) ausgibt.

2. Verfahren nach Patentanspruch 1,
**dadurch gekennzeichnet,**
**dass** im fünften Schritt (S5) die Relationen anhand von Bedingungen zwischen den Textelementen und/oder anhand von der Wahrscheinlichkeit des gemeinsamen Auftretens der Textelemente ermittelt werden.

3. Verfahren nach Patentanspruch 2,
**dadurch gekennzeichnet,**
**dass** bei der Ermittlung der Wahrscheinlichkeit des gemeinsamen Auftretens ein räumlicher Abstand zwischen den Textelementen in einem Textblock berücksichtigt wird.

4. Verfahren nach einem der vorhergehenden Patentansprüche,
**dadurch gekennzeichnet,**
**dass** in dem ersten Schritt (S1) zumindest ein bestehendes Automatisierungsprojekt (PR) zur Erweiterung von Informationen über die Namenskonventionen (SK) verwendet wird.

5. Verfahren nach einem der vorhergehenden Patentansprüche,
**dadurch gekennzeichnet,**
**dass** in dem dritten Schritt (S3) ein Wort auf seine Grundform reduziert und/oder die Rolle eines Wortes, insbesondere Subjekt, Prädikat, Objekt oder Verb, festgestellt und gespeichert wird.

6. Verfahren nach einem der vorhergehenden Patentansprüche,
**dadurch gekennzeichnet,**
**dass** in dem vierten Schritt (S4) zur Generierung des probabilistischen Sprachmodells eine relative oder absolute Häufigkeit des Auftretens des Textelementes im analysierten Automatisierungsprojekt festgestellt und daraus die Wahrscheinlichkeit des Auftretens eines Textelementes oder einer zusammenhängenden Gruppe von Textelementen errechnet wird.

7. Verfahren nach einem der vorhergehenden Patentansprüche,
**dadurch gekennzeichnet,**
**dass** durch die künstliche Intelligenz (KI) mittels der Ontologie die Informationen in einen Graphen umgesetzt werden, wobei zu den Elementen des Graphen jeweils eine aus der Ontologie hergeleitete Funktion und/oder eine Relation zu anderen Elementen ausgegeben wird.

8. Verfahren nach einem der vorhergehenden Patentansprüche,
**dadurch gekennzeichnet,**
**dass** aus der Ausgabe der künstlichen Intelligenz (KI) Handlungsanweisungen für eine Konfigurierung, Beeinflussung oder Wartung der Automatisierungsanordnung erzeugt werden.

9. Verfahren nach einem der vorhergehenden Patentansprüche,
**dadurch gekennzeichnet,**
**dass** aus der Ausgabe der künstlichen Intelligenz (KI) Programmartefakte, Steuerungsinformationen und/oder Konfigurierungsdaten für die Automatisierungsanordnung, insbesondere für die Generierung von Programmcode für eine industrielle Automatisierungskomponente der Automatisierungsanordnung, erzeugt werden.

10. System zur Nutzung einer künstlichen Intelligenz (KI)
mit einem Sprachmodell zur semantischen Analyse textbasierter Informationen einer industriellen Automatisierungsanordnung, insbesondere von textbasierten Ausgaben, Anweisungen oder anderen Informationsartefakten aus einem industriellen Programm oder Automatisierungsobjekt,
wobei vorgesehen ist, das Sprachmodell mit einer Anfrage mit den Informationen (IN) zu konfrontieren und wobei das Sprachmodell zur Ausgabe einer semantische Analyse (SA) der Informationen (IN) eingerichtet ist, **dadurch gekennzeichnet,**
**dass** das System zur Durchführung des ersten (S1) bis fünften (S5) Verfahrensschritts aus dem Verfahren gemäß Patentanspruch 1 eingerichtet ist.
